# EUROPEAN PATENT SPECIFICATION

(11) **EP 1 764 590 B1**
(45) Date of publication and mention of the grant of the patent: **13.10.2010**
(21) Application number: 06018144.3
(22) Date of filing: 30.08.2006
(51) Int. Cl.: G01F 23/04

(54) **Oil level gauge**
Vorrichtung zur Ölstandsmessung
Dispositif de mesure de niveau d'huile

(30) Priority: 15.09.2005 JP 2005268906
(43) Date of publication of application: 21.03.2007
(73) Proprietor: Honda Motor Co., Ltd., Minato-ku Tokyo 107-8556 (JP)
(72) Inventor: Miyajima, Toshiki, Wako-shi Saitama 351-0193 (JP); Ohta, Shoji, Wako-shi Saitama 351-0193 (JP); Suzuki, Eiji, Wako-shi Saitama 351-0193 (JP)
(74) Representative: Rupp, Christian

(56) References cited:
- EP-A- 0 825 423
- EP-A- 1 450 140
- DE-A1- 2 636 077
- US-A- 4 941 268

## Description

### BACKGROUND OF THE INVENTION

### Field of the Invention

The present invention relates to an oil level gauge for measuring an oil level in a transmission case or an engine block.

### Description of the Related Art

An oil level gauge is a measuring device for measuring the level of oil stored in a transmission case or an engine block, and this device can also detect the degradation of the oil according to the color of the oil deposited on the oil level gauge. Such an oil level gauge is adapted to be inserted into a gauge pipe mounted on a transmission case, for example. Japanese Utility Model Laid-Open No. Hei 7-25206 discloses an oil level gauge having a retainer formed from a rubber member and fixed to an intermediate portion of a gauge rod in order to reduce an oil level measurement error due to fluctuations of a measuring portion formed at the front end of the gauge rod, wherein the retainer comes into sliding contact with the inner surface of the gauge pipe in inserting the oil level gauge into the gauge pipe.

Further, various parts including pipes and auxiliary devices are located in the vicinity of an installation position of the oil level gauge, and it is therefore necessary to avoid possible contact of the oil level gauge with such parts in inserting the oil level gauge into the gauge pipe. There has conventionally been proposed to restrict a rotational position for insertion of the oil level gauge for the purpose of realizing the avoidance of the above contact of the oil level gauge.

For example, Japanese Utility Model Laid-open No. Sho 61-17409 discloses an oil level gauge adapted to be inserted into a gauge pipe having a restriction guide. This oil level gauge has a cap and a retainer both mounted on a gauge rod, and the restriction guide of the gauge pipe functions to restrict a rotational position for insertion of the retainer in the circumferential direction thereof about the axis of the gauge rod, thereby restricting the rotational position for insertion of the oil level gauge.

During high-temperature high-speed running of a vehicle, a transmission oil is agitated to cause a rise in oil temperature and air mixing into the oil, resulting in a rise in oil level. Such an oil level rise further increases the oil agitation, so that when the rise in oil temperature exceeds a cooling capacity of the oil, the oil temperature and the oil level suddenly rise to possibly cause thermal damage to sealing parts and the oil.

To suppress such an oil level rise during high-temperature high-speed running, it is desirable to make the inside space of the transmission case function as an oil reservoir to the maximum extent. In the oil level gauge disclosed in Patent Document 1 mentioned above, however, the space defined between the oil level gauge and the gauge pipe is partitioned into upper and lower spaces by the retainer, so that the oil cannot flow between the inside space (upper space) of the gauge pipe above the retainer and the inside space of the transmission case.

As a result, the space between the oil level gauge and the gauge pipe cannot function as an oil reservoir in the case of oil level rise, and the oil level rise during high-temperature high-speed running may proceed. Moreover, there arises another problem such that the rising oil surface may directly strike against the retainer of the oil level gauge upon braking of a vehicle, for example, causing easy removal of the oil level gauge from the gauge pipe.

Further, the EP 1 450 140 A1 discloses an oil level gauge system according to the preamble of claim 1.

It is therefore an object of the present invention to provide an oil level gauge in which the inside space of a gauge pipe can function as an oil reservoir in the case of oil level change, thereby suppressing an oil level rise occurring at high temperature under high load.

In accordance with the present invention, there is provided an oil level gauge system comprising a gauge pipe fixed to a case, a gauge rod having a front end formed with a measuring portion and a rear end formed with a handle portion which is adapted to be inserted into the gauge pipe for measuring the level of oil stored in said case; a cap fixed to the gauge rod for closing a gauge rod insertion opening of the gauge pipe; and a retainer fixed to an intermediate portion of the gauge rod between said cap and said measuring portion, the retainer having an outer circumference formed with at least one recess; wherein when the gauge rod is inserted into the gauge pipe, the outer circumference of the retainer comes into contact with the inner circumferential surface of the gauge pipe, and a space defined between the gauge rod and the gauge pipe communicates with a space in the case through the recess of the retainer.

According to the above configuration, at least one recess is formed on the outer circumference of the retainer, thereby allowing the oil to flow through the recess of the retainer between the inside space of the gauge pipe above the retainer and the inside space of the case. As a result, the inside space of the gauge pipe can function as an oil reservoir in the case of oil level change, so that an oil level rise occurring at high temperature under high load can be suppressed to thereby prevent thermal damage to the sealing parts and the oil at high temperature under high load.

Further, as mentioned above, the oil flow between the inside space of the gauge pipe above the retainer and the inside space of the case is allowed through the recess formed on the outer circumference of the retainer fitted inside the gauge pipe. Accordingly, the oil level rise upon braking of a vehicle, for example, can be relieved through the recess into the inside space of the gauge pipe above the retainer, thereby solving the problem of easy removal of the oil level gauge from the gauge pipe.

According to the present invention, the oil level gauge further includes a rib provided in the gauge pipe, the rib having a cross-sectional shape corresponding to that of the recess.

With this configuration, the oil flow between the inside space of the gauge pipe and the inside space of the case is allowed through the recess of the retainer. In addition, the rib of the gauge pipe can have a function of positioning the oil level gauge in its rotational direction about the axis of the gauge rod without additionally providing any special structure on the oil level gauge. Accordingly, the contact between the handle portion and other parts in inserting or removing the oil level gauge can be avoided.

The above and other objects, features and advantages of the present invention and the manner of realizing them will become more apparent, and the invention itself will best be understood from a study of the following description and appended claims with reference to the attached drawings showing some preferred embodiments of the invention.

### BRIEF DESCRIPTION OF THE DRAWINGS

FIG. 1A is a partially sectional elevation of an oil level gauge according to a first preferred embodiment of the present invention;
FIG. 1B is a cross section taken along the line 1B-1B in FIG. 1A;
FIG. 2A is a partially sectional elevation of an oil level gauge according to a second preferred embodiment of the present invention;
FIG. 2B is a cross section taken along the line 2B-2B in FIG. 2A;
FIG. 3A is a partially sectional elevation of an oil level gauge according to a third preferred embodiment of the present invention;
FIG. 3B is a cross section taken along the line 3B-3B in FIG. 3A;
FIG. 4A is a partially sectional elevation of an oil level gauge according to a fourth preferred embodiment of the present invention, and
FIG. 4B is a cross section taken along the line 4B-4B in FIG. 4A.

### DETAILED DESCRIPTION OF THE PREFERRED EMBODIMENTS

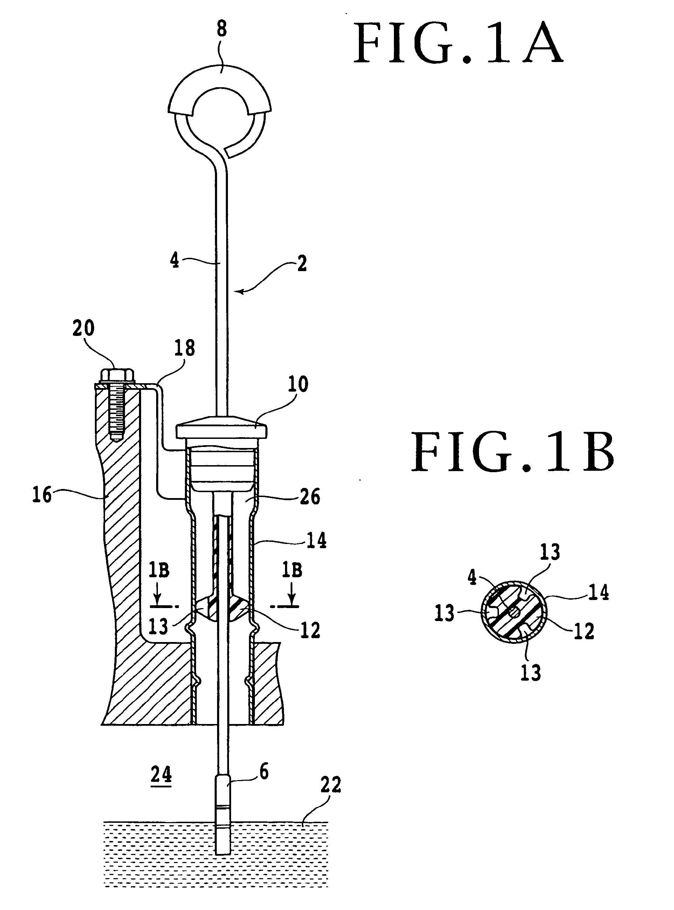

Referring to FIG. 1A, there is shown a partially sectional elevation of an oil level gauge 2 according to a first preferred embodiment of the present invention. FIG. 1B is a cross section taken along the line 1B-1B in FIG. 1A. The oil level gauge 2 is composed of a gauge rod 4 formed from a round bar, a cap 10 fixed to the gauge rod 4, and an annular retainer 12 fixed to the gauge rod 4 at an intermediate portion thereof below the cap 10.

A measuring portion 6 is formed at the front end (lower end) of the gauge rod 4, and a handle portion 8 is formed at the rear end (upper end) of the gauge rod 4. The measuring portion 6 is formed by pressing a round bar in radially opposite directions. The cap 10 and the retainer 12 are integrally molded by injecting rubber such as acrylic rubber into a mold through which the gauge rod 4 is inserted. Thus, the cap 10 and the retainer 12 are fixed together to the gauge rod 4. As a modification, the cap 10 and the retainer 12 may be molded separately.

As shown in FIG. 1B, a plurality of (three in this preferred embodiment) recesses 13 are formed on the outer circumference of the retainer 12. The present invention is not limited to this preferred embodiment wherein the retainer 12 has the plural recesses 13, but it is essential that at least one recess is formed on the outer circumference of the retainer 12. Reference numeral 14 denotes a gauge pipe. The gauge pipe 14 has a lower end portion fixed to a transmission case 16 and an upper end portion fixed through a stay 18 to the transmission case 16 by a screw 20.

As shown in FIG. 1A, the outer circumference of the retainer 12 is in contact with the inner circumferential surface of the gauge pipe 14 in the condition where the oil level gauge 2 is inserted in the gauge pipe 14. In this operative condition, a gauge rod insertion opening of the gauge pipe 14 as an upper opening thereof is closed by the cap 10. Further, in this condition, a space 26 defined between an upper portion of the gauge rod 4 above the retainer 12 and the gauge pipe 14 is in communication with a space 24 in the transmission case 16 through the recesses 13 of the retainer 12. Reference numeral 22 denotes a transmission oil stored in the transmission case 16.

Accordingly, although the outer circumference of the retainer 12 is in contact with the inner circumferential surface of the gauge pipe 14, the transmission oil 22 in the transmission case 16 is allowed to flow through the recesses 13 of the retainer 12 into the space 26 in the gauge pipe 14 above the retainer 12. As a result, the space 26 in the gauge pipe 14 above the retainer 12 can function as an oil reservoir in the case of oil level change, so that an oil level rise occurring at high temperature under high load can be suppressed to thereby prevent thermal damage to the sealing parts and the oil at high temperature under high load.

As mentioned above, the outer circumference of the retainer 12 is in contact with the inner circumferential surface of the gauge pipe 14 in the condition where the oil level gauge 2 is inserted in the gauge pipe 14. Accordingly, the measuring portion 6 can be kept at a radially central position of the gauge pipe 14 (i.e., a position lying on the axis of the gauge pipe 14). As a result, it is possible to prevent that the measuring portion 6 may come into contact with the gauge pipe 14 in removing the oil level gauge 2 and that an oil level marked by the oil on the surface of the measuring portion 6 may be changed by this contact.

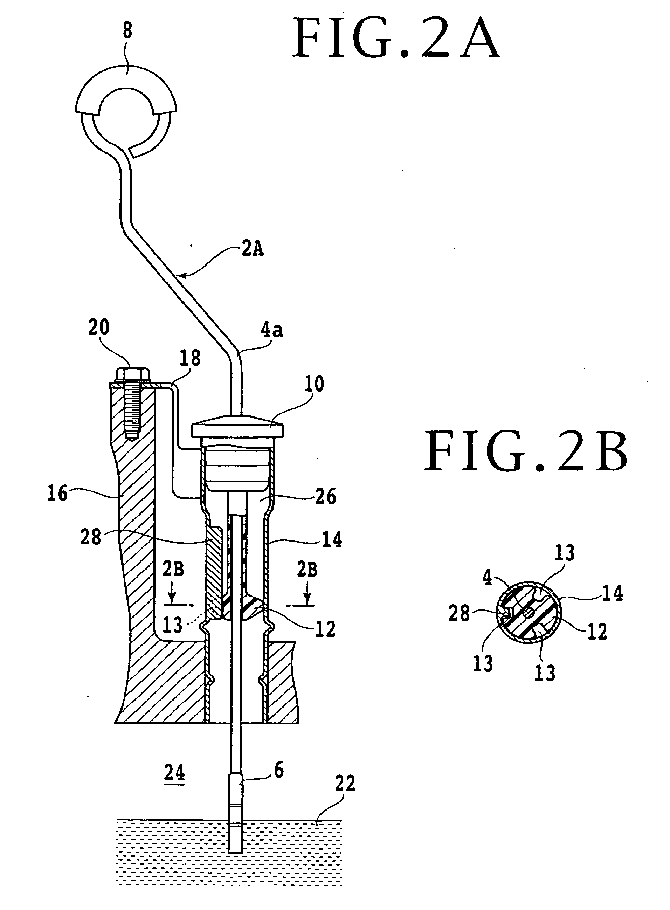

FIGS. 2A and 2B show an oil level gauge 2A according to a second preferred embodiment of the present invention, wherein FIG. 2A is a partially sectional elevation of the oil level gauge 2A and FIG. 2B is a cross section taken along the line 2B-2B in FIG. 2A. This preferred embodiment is characterized in that a rib 28 having a cross-sectional shape corresponding to that of one of the plural recesses 13 of the retainer 12 is provided on the inner circumferential surface of the gauge pipe 14. The rib 28 may be formed integrally with the gauge pipe 14.

This preferred embodiment is further characterized in that the upper portion of the gauge rod 4 above the cap 10 is formed with a bent portion 4a, so that the handle portion 8 is offset from the lower portion of the gauge rod 4 provided with the cap 10 and the retainer 12. The reason for this offset arrangement of the handle portion 8 is to avoid possible contact of the handle portion 8 with other parts in inserting or removing the oil level gauge 2A into or from the gauge pipe 14.

As mentioned above, the rib 28 having a cross-sectional shape corresponding to that of one of the plural recesses 13 of the retainer 12 is formed on the inner circumferential surface of the gauge pipe 14. Accordingly, the oil level gauge 2A is allowed to be inserted into the gauge pipe 14 only when the angular position of one of the recesses 13 comes into coincidence with the angular position of the rib 28. Thus, the rib 28 of the gauge pipe 14 can have a function of positioning the oil level gauge 2A in its rotational direction about the axis of the gauge rod 4. As a result, the rotational position for insertion of the oil level gauge 2A can be restricted to thereby avoid the contact between the handle portion 8 and other parts in inserting or removing the oil level gauge 2A.

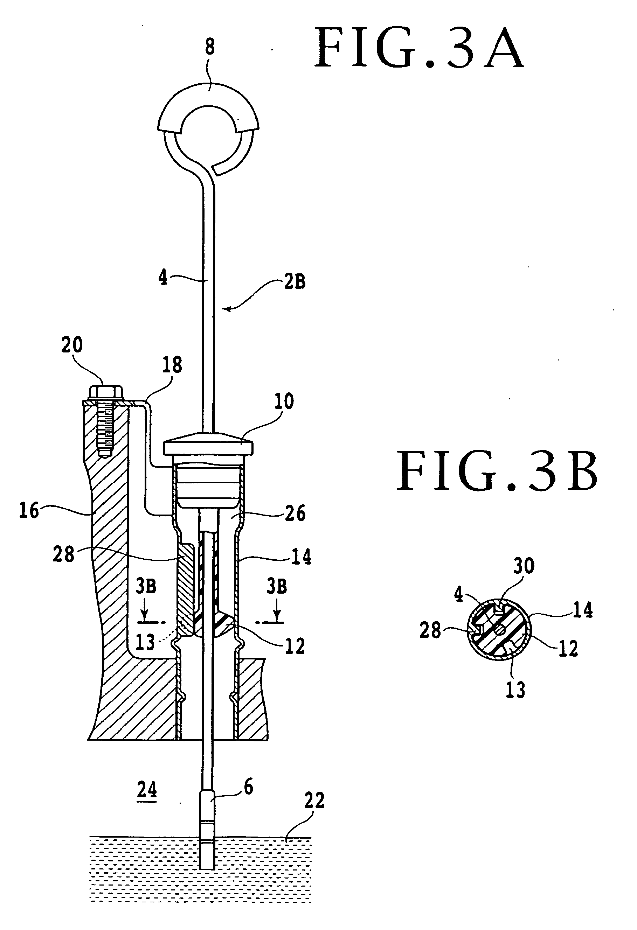

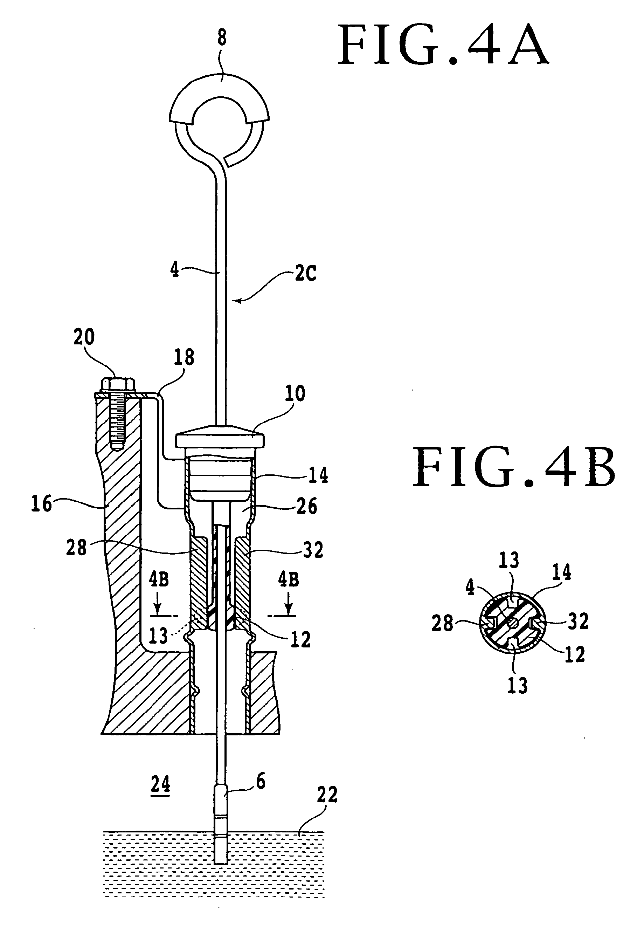

FIGS. 3A and 3B show an oil level gauge 2B according to a third preferred embodiment of the present invention, wherein FIG. 3A is a partially sectional elevation of the oil level gauge 2B and FIG. 3B is a cross section taken along the line 3B-3B in FIG. 3A. FIGS. 4A and 4B show an oil level gauge 2C according to a fourth preferred embodiment of the present invention, wherein FIG. 4A is a partially sectional elevation of the oil level gauge 2C and FIG. 4B is a cross section taken along the line 4B-4B in FIG. 4A.

In the oil level gauge 2B according to the third preferred embodiment shown in FIGS. 3A and 3B, the retainer 12 has three recesses 13, and two of these recesses 13 are spaced 90° apart from each other in the circumferential direction of the retainer 12. Further, two ribs 28 and 30 each having a cross-sectional shape corresponding to that of each recess 13 are formed on the inner circumferential surface of the gauge pipe 14 at such positions that these two ribs 28 and 30 respectively come into engagement with the above two 90° spaced recesses 13.

In the oil level gauge 2C according to the fourth preferred embodiment shown in FIGS. 4A and 4B, the retainer 12 has four recesses 13 any adjacent ones of which are spaced 90° apart from each other in the circumferential direction of the retainer 12, and a pair of ribs 28 and 32 each having a cross-sectional shape corresponding to that of each recess 13 are formed on the inner circumferential surface of the gauge pipe 14 at such positions that these ribs 28 and 32 respectively come into engagement with two radially opposite ones of these four recesses 13 (i.e., these two radially opposite recesses 13 are spaced 180° apart from each other).

As shown in FIG. 3B, the other recess 13 is not engaged with the ribs 28 and 30 to thereby have a function of making the communication of the space 26 defined between the gauge rod 4 and the gauge pipe 14 with the space 24 defined in the transmission case 16. Similarly, the other recesses 13 shown in FIG. 4B are not engaged with the ribs 28 and 32 to thereby have the same function as that mentioned above. Thus, although some of the plural recesses 13 are plugged with the ribs 28 and 30 or the ribs 28 and 32, the oil is allowed to flow through the other recess or recesses 13 between the inside space 26 of the gauge pipe 14 and the inside space 24 of the transmission case 16.

Further, the arrangement or shape of the recesses 13 and the ribs 28 and 30 according to the third preferred embodiment shown in FIGS. 3A and 3B is made different from that of the recesses 13 and the ribs 28 and 32 according to the fourth preferred embodiment shown in FIGS. 4A and 4B. Accordingly, the oil level gauge 2B shown in FIGS. 3A and 3B is allowed to be inserted into only the gauge pipe 14 shown in FIGS. 3A and 3B, and the oil level gauge 2C shown in FIGS. 4A and 4B is allowed to be inserted into only the gauge pipe 14 shown in FIGS. 4A and 4B. Such different configurations provide an advantage such that improper installation of oil level gauges for different vehicle models can be prevented.

## Claims

1. An oil level gauge system, comprising:
a gauge pipe (14) fixed to a case (16),
a gauge rod (4) having a front end formed with a measuring portion (6) and a rear end formed with a handle portion (8), and the gauge rod (4) is adapted to be inserted into the gauge pipe (14) for measuring the level of oil stored in said case (16);
a cap (10) fixed to said gauge rod (4) for closing a gauge rod (4) insertion opening of said gauge pipe (14); and
a retainer (12) fixed to an intermediate portion of said gauge rod (4) between said cap (10) and said measuring portion (6), said retainer (12) having an outer circumference formed with at least one recess;
wherein when said gauge rod (4) is inserted into said gauge pipe (14), the outer circumference of said retainer (12) comes into contact with the inner circumferential surface of said gauge pipe (14), and a space defined between said gauge rod (4) and said gauge pipe (14) communicates with a space in said case through said recess of said retainer (12);
**characterized in that**
the oil level gauge system further comprises a rib (28) provided in said gauge pipe (14), said rib (28) having a cross-sectional shape corresponding to that of said recess.

## Patentansprüche

1. Ölstandmesssystem, umfassend:
ein Messrohr (14), welches an einem Gehäuse (16) fixiert ist,
eine Messstange (4), welche ein vorderes Ende, welches mit einem Messabschnitt (6) ausgebildet ist, und ein hinteres Ende aufweist, welches mit einem Griffabschnitt (8) ausgebildet ist, und wobei die Messstange (4) angepasst ist, um in das Messrohr (14) zum Messen des Standes von Öl, welches in dem Gehäuse (16) gelagert ist, eingeführt zu werden;
eine Kappe (10), welche an der Messstange (4) zum Schließen der Messstangen-(4)-Einführöffnung des Messrohrs (14) fixiert ist;
und
einen Halter (12), welcher an einem intermediären Abschnitt der Messstange (4) zwischen der Kappe (10) und dem Messabschnitt (6) fixiert ist, wobei der Halter (12) einen äußeren Umfang aufweist, welcher mit mindestens einer Aussparung ausgebildet ist;
wobei, wenn die Messstange (4) in das Messrohr (14) eingeführt ist, der äußere Umfang des Halters (12) in Kontakt mit der inneren umfänglichen Oberfläche des Messrohrs (14) gelangt, und ein Raum zwischen der Messstange (4) und dem Messrohr (14) mit einem Raum in dem Gehäuse durch die Aussparung des Halters (12) kommuniziert;
**dadurch gekennzeichnet, dass**
das Ölstandsmesssystem weiterhin eine Rippe (28) umfasst, welche in dem Messrohr (14) vorgesehen ist, wobei die Rippe (28) eine Querschnittform entsprechend zu derjenigen der Aussparung aufweist.

## Revendications

1. Système de jauge de niveau d'huile, comprenant :
un tuyau de jauge (14) fixé à un carter (16),
une tige de jauge (4) comportant une extrémité avant formée avec une portion de mesure (6) et une extrémité arrière formée avec une portion de poignée (8), la tige de jauge (4) étant adaptée pour être insérée dans le tuyau de jauge (14) pour mesurer le niveau d'huile stocké dans ledit carter (16) ;
un capuchon (10) fixé à ladite tige de jauge (4) pour fermer une ouverture d'insertion de la tige de jauge (4) dudit tuyau de jauge (14) ; et
un dispositif de retenue (12) fixé à une portion intermédiaire de ladite tige de jauge (4) entre ledit capuchon (10) et ladite portion de mesure (6), ledit dispositif de retenue (12) présentant une circonférence externe formée avec au moins un évidement ;
dans lequel lorsque ladite tige de jauge (4) est insérée dans ledit tuyau de jauge (14), la circonférence externe dudit dispositif de retenue (12) entre en contact avec la surface circonférentielle interne dudit tuyau de jauge (14), et un espace défini entre ladite tige de jauge (4) et ledit tuyau de jauge (14) communique avec un espace dans ledit carter par ledit évidement dudit dispositif de retenue (12) ;
**caractérisé en ce que**
le système de jauge de niveau d'huile comprend en outre une nervure (28) disposée dans ledit tuyau de jauge (14), ladite nervure (28) ayant une forme en coupe transversale correspondant à celle dudit évidement.
